Europäisches Patentamt

European Patent Office

Office européen des brevets

(19)

(11) Veröffentlichungsnummer : **0 471 076 B1**

(12) **EUROPÄISCHE PATENTSCHRIFT**

(45) Veröffentlichungstag der Patentschrift :
**11.08.93 Patentblatt 93/32**

(21) Anmeldenummer : **90915986.5**

(22) Anmeldetag : **19.01.90**

(86) Internationale Anmeldenummer :
**PCT/SU90/00020**

(87) Internationale Veröffentlichungsnummer :
**WO 91/10356 25.07.91 Gazette 91/17**

(51) Int. Cl.$^5$ : **A01J 7/00**, G01F 15/02,
G01F 11/32, G01F 3/38

(54) **EINRICHTUNG ZUR BESTIMMUNG DES MELKERTRAGS EINER MELKANLAGE.**

(43) Veröffentlichungstag der Anmeldung :
**19.02.92 Patentblatt 92/08**

(45) Bekanntmachung des Hinweises auf die
Patenterteilung :
**11.08.93 Patentblatt 93/32**

(84) Benannte Vertragsstaaten :
**DE FR GB IT NL SE**

(56) Entgegenhaltungen :
**WO-A- 9/15463
TRANSACTIONS OF THE AM. SOC. OF AGRI-
CULTURAL ENGINEERS Bd. 27, Nr. 1, ST.JO-
SEPHS,MICHIGAN,USA Seiten 214 - 218; M.J.
DELWICHE ET AL.: 'INSTANTANEOUS MILK
FLOW RATE PATTERNS FROM CONVENTIO-
NAL TEAT CUPS'**

(73) Patentinhaber : **LATVIISKAYA
SELSKOKHOZYAISTVENNAYA AKADEMIA
ul. Lenina, 2 Elgava
Latviiskaya SSR, 229600 (SU)**

(72) Erfinder : **MOSKVIN, Gennady Alexeevich
ul. Satiksmes, 49-59
Elgava 229601, Latviiskaya SSR (SU)**

(74) Vertreter : **Patentanwälte Zellentin & Partner
Zweibrückenstrasse 15
W-8000 München 2 (DE)**

Anmerkung : Innerhalb von neun Monaten nach der Bekanntmachung des Hinweises auf die Erteilung
des europäischen Patents kann jedermann beim Europäischen Patentamt gegen das erteilte europäische Patent Einspruch einlegen. Der Einspruch ist schriftlich einzureichen und zu begründen. Er gilt
erst als eingelegt, wenn die Einspruchsgebühr entrichtet worden ist (Art. 99(1) Europäisches Patentübereinkommen).

**Beschreibung**

Die Erfindung bezieht sich auf die Melktechnik, insbesondere auf Einrichtungen zur Bestimmung des Melkertrags einer Melkanlage.

Es ist eine Einrichtung zur Bestimmung des Melkertrags einer Melkanlage bekannt (SU-A-657260), die ein Gehäuse mit in demselben vorhandenen Kammern, einer Aufnahme- und einer Messkammern, sowie einem beweglichen hohlen Stock mit einer Seitenöffnung und einem am Stock befestigten Schwimmer sowie einem am unteren Stockende befestigten und in der Messkammer befindlichen Ventil enthält. Das obere Stockende ist geschlossen, das untere aber offen. Die Aufnahme- und die Messkammer sind durch eine Trennwand mit einer die beiden Kammern in Verbindung setzenden Zentralöffnung getrennt. Bei der Bewegung des hohlen Stockes tritt die Seitenöffnung dieses Stockes im Augenblick des Ventilansprechens in der Messkammer über die Grenzen des Gehäuses des Milchdosierers hinaus. Der bewegliche Stock wirkt beim Ansprechen des Ventils in der Messkammer mit dem Antrieb eines Zählwerkes zusammen, das die einzelnen Milchdosen zählt.

Allerdings kommt es im Augenblick des Ventilansprechens und der Absperrung der Öffnung in der Trennwand des Ventils zu einem unkontrollierten Nachfüllen einer Milchportion in die Messkammer infolge der entstehenden Differenz des Unterdruckes in der Aufnahmekammer und des atmosphärischen Druckes in der Messkammer. Dies bringt Fehler bei der Zählung einzelner Milchdosen hinein. Überdies entsteht ein zusätzlicher Fehler bei der Zählung der einzelnen Dosen infolge der vorhandenen mechanischen Verbindung des beweglichen hohlen Stockes des Milchdosierers mit dem Antrieb des für die einzelnen Milchdosen bestimmten Zählwerks. Die bekannte Einrichtung sieht keine Einstellung des Milchdosierers auf eine optimale Dose unter realen Betriebsbedingungen der Melkanlagen in den Milchfarmen vor.

Bekannt ist eine Einrichtung zur Bestimmung des Melkertrags einer Melkanlage gemäß dem Oberbegriff des Anspruchs 1 (SU-A-I345059), die einen diskreten Geber vom Schwimmertyp zum Messen einzelner Milchdosen enthält, der eine Aufnahmekammer mit einem Ein- und einem Austrittsstutzen sowie eine Messkammer mit einem Austrittsstutzen einschliesst, die durch eine Trennwand mit Öffnung voneinander getrennt sind. In der Messkammer befindet sich ein Schwimmerelement, das an einem hohlen Stock befestigt ist, der mit einer Öffnung in seiner Seitenwand ausgestattet ist, die ausserhalb der Aufnahmekammer liegt und bei der Bewegung des hohlen Stockes bis zur vorgegebenen Position in der mit der Richtung des Milchanstiegs im diskreten Geber übereinstimmenden Richtung mit der Atmosphäre in Verbindung gesetzt wird. In der Zone des geschlossenen Endes des hohlen Stocks ist ein Magnet befestigt, während in der Zone des offenen Endes des hohlen Stockes ein Ventil angebracht ist, das in der Messkammer unter der Trennwand mit der Öffnung angeordnet ist. Die bekannte Einrichtung enthält darüber hinaus einen Milchsammelbehälter, dessen erster Eintrittsstutzen mit dem Austrittsstutzen der Messkammer des diskreten Gebers, dessen zweiter Eintrittsstutzen aber mit dem Austrittsstutzen der Aufnahmekammer des diskreten Gebers in Verbindung steht, deren Eintrittsstutzen mit der Vakuumsystemleitung für den Milchtransport in der Melkanlage verbunden ist. Der Austrittsstutzen des Milchsammelbehälters ist mit der Vakuumsystemleitung der Melkanlage verbunden und enthält ferner eine Recheneinheit, einen Summiergeber für die einzelnen Milchdosen, dessen Anschlüsse an den ersten Eingang und den ersten Ausgang der Recheneinheit angeschlossen sind und der sich in der Anordnungszone des am hohlen Stock befestigten Magneten befindet, und zwar im Augenblick der Erzielung der vorgegebenen Milchhöhe im diskreten Geber.

Die bekannte Einrichtung enthält keine Überwachungsmittel der Unterdruckänderung in der Melkanlage, was einen Fehler bei der Bestimmung optimaler Milchdosen hineinbringt.

Der Erfindung liegt die Aufgabe zugrunde, eine solche Einrichtung zur Bestimmung des Melkertrags einer Melkanlage zu schaffen, die es erlaubt, unkontrollierte Milchportionen in der Messkammer bei Änderungen des Unterdruckes in der Melkanlage zu messen, was zur Erhöhung der Milchertragsbestimmungsgenauigkeit führt.

Die gestellte Aufgabe wird dadurch gelöst, dass die Einrichtung zur Bestimmung des Melkertrags einer Melkanlage, die einen diskreten Geber vom Schwimmer-Typ zum Messen einzelner Milchdosen, der eine Aufnahmekammer mit einem Ein- und einem Austrittsstutzen sowie eine Messkammer mit einem Austrittsstutzen einschliesst, die durch eine Trennwand mit Öffnung voneinander getrennt sind, wobei in der Messkammer ein Schwimmerelement vorhanden ist, das an einem hohlen Stock befestigt ist, der mit einer Öffnung in dessen Seitenwand ausgestattet ist, die ausserhalb der Aufnahmekammer liegt und bei der Bewegung des hohlen Stockes bis zur vorgegebenen Stelle in der mit der Richtung des Milchanstiegs im diskreten Geber übereinstimmenden Richtung mit der Atmosphäre in Verbindung steht, wobei in der Zone des geschlossenen Endes des hohlen Stockes ein Dauermagnet befestigt ist, während in der Zone des offenen Endes des hohlen Stockes ein in der Messkammer unter der Trennwand mit der Öffnung befindliches Ventil befestigt ist, einen Milchsammelbehälter, dessen erster Eintrittsstutzen mit dem Austrittsstutzen der Messkammer des diskreten Gebers, dessen zweiter Eintrittsstutzen aber mit dem Austrittsstutzen der Aufnahmekammer des diskreten Gebers in Verbindung steht, deren Eintrittsstutzen mit der Vakuumsystemleitung für den Milchtransport in der Melkanlage verbunden ist, während der Austrittsstutzen des Milchsammelbehälters mit der Vakuumsystemleitung der Melkanlage verbunden ist, eine Recheneinheit und einen Summiergeber für die einzelnen Milchdosen enthält, dessen Anschlüsse an den ersten Eingang und den ersten Ausgang der Recheneinheit angeschlossen sind und der in der Anordnungszone des am hohlen Stock befestigten Dauermagneten im Augenblick der Erreichung der vorgegebenen Milchhöhe im diskreten Geber liegt, erfindungsgemäss ein mit dem Milchsammelbehälter in Verbindung stehendes Vakuummeter enthält, das zum Messen der Vakuumhöhe im Sammelbehälter der Melkanlage und Erzeugen von Steuersignalen bestimmt ist, die beim Formieren der endgültigen Korrektur der vorkorrigierten einzelnen Milchdosen wirksam werden, welche von der Änderung der Vakuumhöhe im Milchsammelbehälter abhängen, während die Recheneinheit in Form einer Gruppe von Impulszählern ausgeführt ist, die den Koeffizienten der endgültigen Korrektur der vorkorrigierten einzelnen Milchdosen entsprechen, wobei das Vakuummeter einen beweglichen Vakuumhöhenanzeiger im Milchsammelbehälter mit einem daran angebrachten zweiten Dauermagneten und eine mit dem zweiten Dauermagneten zusammenwirkende Gruppe von Schutzgaskontakten enthält, von denen jeder zur Erzeugung des Steuersignals durch Ein-/Ausschalten eines entsprechenden Impulszählers bestimmt und über seinen ersten Anschluss an den ersten Eingang des jeweiligen Impulszählers angeschlossen ist, während die zweiten Eingänge sämtlicher Impulszähler vereinigt und an den ersten Anschluss des Schutzgaskontaktes des Summiergebers für die einzelnen Milchdosen angeschlossen sind, dessen zweiter Anschluss mit den zweiten Anschlüssen der Schutzgaskontakte des Vakuummeters verbunden ist.

Die Erfindung gewährleistet eine genaue Information über die gemolkene Milchmenge auf verschiedenen Typen von Melkanlagen in den Milchfarmen. Dank der Verwertung der gewonnenen Information über die gemolkenen Milchmengen wird die Effektivität der zootechnischen, Veterinär- und Zuchtarbeit mit der Herde erhöht. Die Erfindung stellt eine neue aussichtsreiche Entwicklungsrichtung der Einrichtungen zur Bestimmung der Melkerträge dar, die mit dem Einsatz der Mikroprozessor- und Rechentechnik in den Anlagen zur Messung der gemolkenen Milchmengen zusammenhängt, was zur Erweiterung funktionaler und metrologischer Möglichkeiten der eingesetzten technischen Mittel zur Bestimmung der Melkerträge der Melkanlagen beiträgt. Die Verwertung der gemäss der vorliegenden Erfindung gewonnenen genaueren Information trägt zur Steigerung der Melkerträge und Herabsetzung des Aufwandes für die Bedienung der Milchzähler bei, erhöht die Zuverlässigkeit und Richtigkeit der Melkertragsbestimmung und sieht die Anwendungsmöglichkeit der Erfindung im Rahmen automatisierter Milchfarmenleitungssysteme vor.

Die durch die vorliegende Erfindung vorgesehene Funktion der Überwachung der Vakuumhöhenmessung in der Melkanlage und die Schaffung von gegenseitigen Abhängigkeiten zwischen der Vakuumhöhe im Melksystem und den Anzeigen der gemolkenen Milchmengen gestattet es, eine endgültige Korrektur der vorkorrigierten einzelnen Milchdosen während des Melkens von Tieren mittels Melkanlagen unter realen Betriebsbedingungen vorzunehmen, was die Messgenauigkeit des Melkertrags der Melkanlagen erheblich vergrössert.

Im folgenden wird die Erfindung durch ein konkretes Ausführungsbeispiel anhand von Zeichnungen näher erläutert; in den Zeichnungen zeigt:

Fig. 1 die Gesamtansicht der Einrichtung zur Bestimmung des Melkertrags einer Melkanlage mit einer Recheneinheit, die in Form einer Gruppe von Impulszählern ausgeführt ist, im Augenblick des Betriebs eines der Impulszähler, gemäss der Erfindung;

Fig. 2 das elektrische Schaltbild eines Impulszählers bei nomineller Vakuumhöhe im Milchsammelbehälter der Melkanlage, gemäss der Erfindung;

Fig. 3 das elektrische Schaltbild eines Impulszählers bei Abweichung der Vakuumhöhe vom Nennbetrag im Milchsammelbehälter der Melkanlage, gemäss der Erfindung.

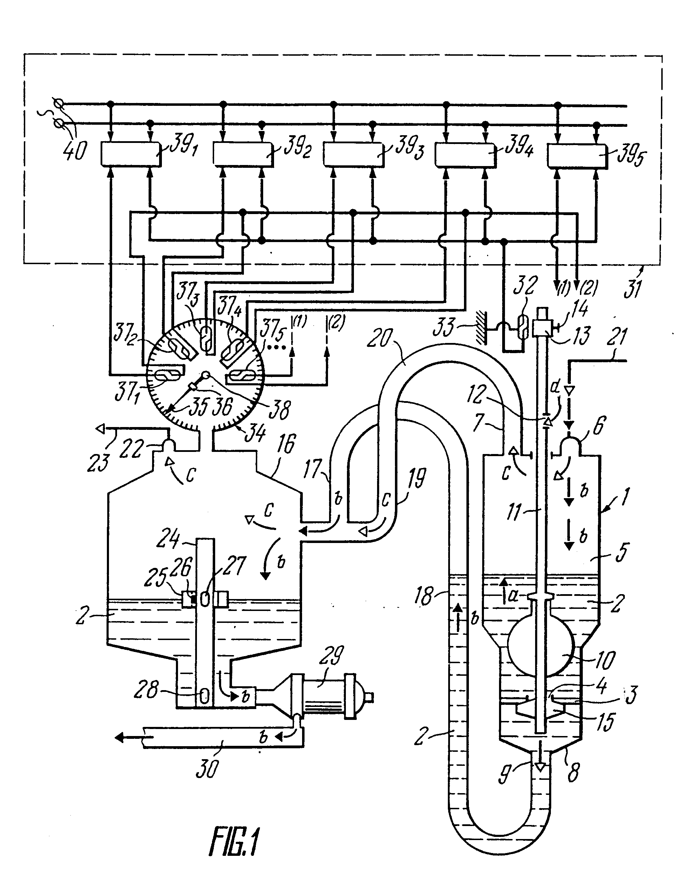

Die Einrichtung zur Bestimmung des Milchertrags einer Melkanlage enthält einen diskreten Geber 1 (Fig. 1) vom Schwimmer-Typ zum Messen einzelner Dosen der Milch 2, der eine Aufnahmekammer 5 mit einem Eintrittsstutzen 6 und einem Austrittsstutzen 7 sowie eine Messkammer 8 mit einem Austrittsstutzen 9 einschliesst, wobei die Kammern durch eine Trennwand 3 mit Öffnung 4 voneinander getrennt sind. In der Messkammer 8 befindet sich ein Schwimmerelement 10, das an einem hohlen Stock 11 befestigt ist, der mit einer Öffnung 12 in seiner Seitenwand ausgestattet ist, die ausserhalb der Aufnahmekammer 5 liegt und bei der Bewegung des hohlen Stocks 11 bis zur vorgegebenen Stelle in der mit der Richtung des Milchanstiegs im diskreten Geber 1 übereinstimmenden Richtung mit der Atmosphäre in Verbindung gesetzt wird. Die Anstiegsrichtung der Milch 2 ist durch einen Pfeil "a" angedeutet.

In der Zone des geschlossenen Endes des hohlen Stocks 11 ist ein Dauermagnet 13 mit Hilfe eines Befestigungselementes 14 befestigt, während in der Zone des offenen Endes des hohlen Stocks 11 ein Ventil 15 befestigt ist, das in der Messkammer 8 unter der Trennwand 3 mit der Öffnung 4 liegt. Das Ventil 15 kann aus elastischem Werkstoff, beispielsweise aus Gummi gefertigt sein.

Die Einrichtung zur Bestimmung des Melkertrags enthält ferner einen Milchsammelbehälter 16, dessen Eintrittsstutzen 17 mittels einer Rohrleitung 18 mit dem Austrittsstutzen 9 der Messkammer 8 des diskreten Gebers 1 verbunden ist. Ein Eintrittsstutzen 19 des Milchsammelbehälters 16 ist über eine Rohrleitung 20 mit dem Austrittsstutzen 7 der Aufnahmekammer 5 des diskreten Gebers 1 verbunden. Der Eintrittsstutzen 6 der Aufnahmekammer 5 ist mit einer Vakuumsystemleitung 21 für den Milchtransport in der Melkanlage verbunden. Ein Austrittsstutzen 22 des Milchsammelbehälters 16 ist mit einer Vakuumsystemleitung 23 der Melkanlage verbunden.

Der Milchsammelbehälter 16 enthält einen hohlen Stock 24 aus unmagnetischem Werkstoff, an dem längs dieses Stocks 24 verschiebbar beim Füllen des Milchsammelbehälters 16 mit Milch 2 (bei Änderung der Standhöhe der Milch 2 im Milchsammelbehälter 16) ein Schwimmer 25 mit einem Magneten 26 angebracht ist, der mit einem Schutzgaseinschaltkontakt 27 und einem Schutzgasabschaltkontakt 28 einer Förderpumpe 29 zum Transport der Milch zu/ihrer primären Behandlung über eine Rohrleitung 30 zusammenwirkt. Die Bewegungsrichtung der flüssigen Fraktion der Milch 2 in der Melkanlage ist durch Pfeile "b" angedeutet. Durch Pfeile "c" ist die Bewegungsrichtung der Gas-Luft-Fraktion der Milch 2 angedeutet.

Die Einrichtung zur Bestimmung des Melkertrags einer Melkanlage enthält eine Recheneinheit 31 und einen Summiergeber 32 für die einzelnen Milchdosen, dessen Anschlüsse an den ersten Eingang und den ersten Ausgang der Recheneinheit 31 angeschlossen sind und der in der Anordnungszone des Dauermagneten 13 im Augenblick der Erreichung der vorgegebenen Milchhöhe im diskreten Geber 1 liegt. Der Geber 32 ist an einem Kragstück 33 befestigt. Die Einrichtung zur Bestimmung des Melkertrags einer Melkanlage enthält ein Vakuummeter 34, das mit dem Milchsammelbehälter 16 in Verbindung steht und zur Bestimmung der Vakuumhöhe im Milchsammelbehälter 16 der Melkanlage und Erzeugung von Steuersignalen beim Formieren der endgültigen Korrektur der vorkorrigierten einzelnen Milchdosen bestimmt ist, die von der Änderung der Vakuumhöhe im Milchsammelbehälter 16 abhängen, und einen beweglichen Anzeiger 35 der Vakuumhöhe im Milchsammelbehälter 16 mit einem daran angebrachten Dauermagneten 36 und einer Gruppe von Schutzgaskontakten $37_1$, $37_2$,..., $37_n$ einschliesst, deren Zahl von der gewählten Diskretheit der einzeln korrigierten Zählungen der Milchdosen gemäss der Vakuumhöhe im Milchsammelbehälter 16 abhängt. Im konkreten Ausführungsbeispiel ist die Zahl n der Schutzgaskontakte gleich fünf. Der erste und der zweite Anschluss eines jeden Schutzgaskontaktes $37_1$, $37_2$,..., $37_5$ sind jeweils an den Eingang und den Ausgang der Recheneinheit 31 angeschlossen. Der bewegliche Anzeiger 35 ist auf einer Achse 38 befestigt.

Beim Melken der Tiere mit der Melkanlage werden die Aufnahmekammer 5 und die Messkammer 8 des diskreten Gebers 1 sowie ein Teil der Bohrleitung 18 mit Milch 2 gefüllt, die während des Abmessens der einzelnen Dosen in den Milchsammelbehälter 16 der Melkanlage gelangt. Durch einen Pfeil "d" ist die Luftbewegungsrichtung durch die Öffnung 12 des hohlen Stocks 11 bei einem dem atmosphärischen Druck gleichen Druckwert angedeutet.

Bei Beginn des Füllens der Messkammer 8 befindet sich die Öffnung 12 des hohlen Stocks 11 im Innenraum der Aufnahmekammer 5 des diskreten Gebers 1, und der Magnet 13 liegt ausserhalb der Zone der Zusammenwirkung mit dem Summiergeber 32 der einzelnen Milchdosen.

Die Recheneinheit 31 ist in Form einer Gruppe von Impulszählern $39_1$, $39_2$... $39_5$ ausgeführt, die den Koeffizienten der endgültigen Korrektur der vorkorrigierten einzelnen Milchdosen entsprechen und an die Klemmen einer Stromquelle 40 angeschlossen sind. Der erste Eingang eines jeden Impulszählers ($39_1$, $39_2$, $39_3$, $39_4$, $39_5$) ist an den ersten Anschluss seines Schutzgaskontaktes ($37_1$, $37_2$, $37_3$, $37_4$, $37_5$) angeschlossen, die zweiten Anschlüsse aller Schutzgaskontakte $37_1$, $37_2$, $37_3$, $37_4$, $37_5$ sind vereinigt und an den ersten Anschluss des Schutzgaskontaktes des Gebers 32 angeschlossen, dessen zweiter Anschluss an die vereinigten zweiten Eingänge der Impulszähler $39_1$, $39_2$...$39_5$ angeschlossen sind, deren dritte und vierte Eingänge an die jeweiligen Klemmen der Wechselstromquelle 40 angeschlossen sind.

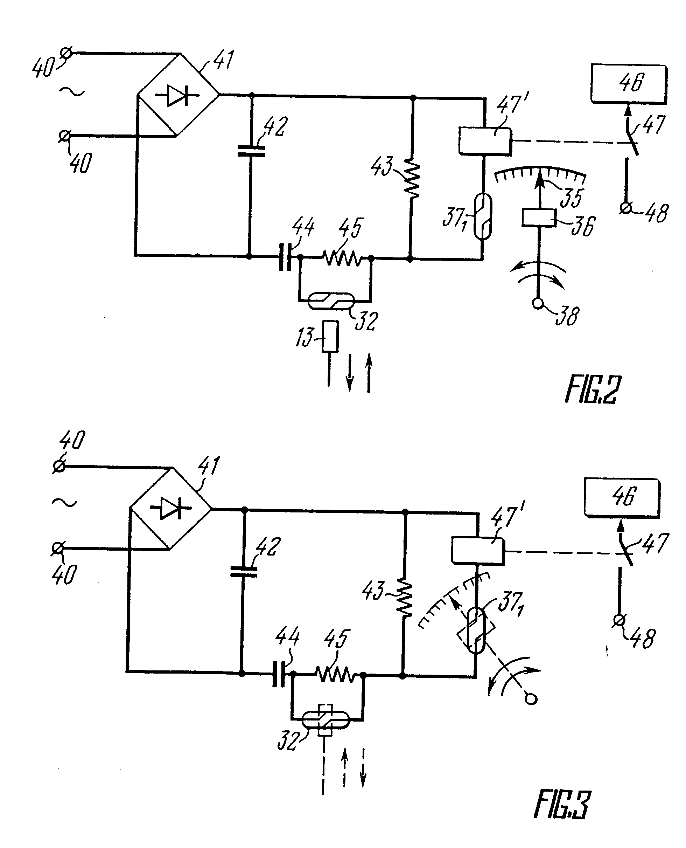

Jeder Impulszähler $39_1$, $39_2$, $39_3$, $39_4$, $39_5$ enthält eine Brückenschaltung 41 (Fig. 2), deren zwei gegenüberliegende Spitzen an die Klemmen der Stromquelle 40 angeschlossen sind, ein Glättungsfilter, das einen an die zwei anderen gegenüberliegenden Spitzen der Brückenschaltung 41 angeschlossenen Kondensator 42 sowie einen Widerstand 43 einschliesst, eine Funkenlöschkette in Form eines Kondensators 44 und eines Widerstandes 45, die zwischen den einen Anschlüssen des Kondensators 42 und des Widerstandes 43 geschaltet ist, sowie eine elektromechanische summierende Zähleinheit 46, deren Eingang über einen Relaisschliesskontakt 47 mit der Klemme 48 der Stromquelle 40 verbunden ist. Eine Wicklung 47' des vorhandenen Relais ist über einen Anschluss an den einen Anschluss des Widerstandes 43, über einen anderen Anschluss aber an den ersten Anschluss eines der Schutzgaskontakte $37_1$, $37_2$, $37_3$, $37_4$, $37_5$, im vorliegenden Beispiel des Schutzgaskontakts $37_1$, angeschlossen, dessen zweiter Anschluss mit dem anderen Anschluss des Widerstandes 43 verbunden ist. Parallel zur Funkenlöschkette ist der Schutzgaskontakt des Summiergebers 32 geschaltet.

In Fig. 3 ist das elektrische Schaltbild beispielsweise eines Impulszählers $39_1$, bei Abweichung der Vakuumhöhe vom Nennbetrag im Milchsammelbehälter 16 (Fig. 1) der Melkanlage dargestellt. Dabei ist der Stromkreis der Relaiswicklung 47' (Fig. 3) geschlossen, das Relais spricht an, und der Kontakt 47 befindet sich im geschlossenen Zustand.

Die Funktionsweise der Einrichtung zur Bestimmung des Melkertrags einer Melkanlage besteht in folgendem. In der vorläufigen Arbeitsstufe nimmt man eine Simulation des Kuhmelkvorgangs unter Verwendung von frisch gemolkener Milch von Melkkühen vor. In der vorläufigen Arbeitsstufe nimmt man die Einstellung der Einrichtung zur Bestimmung des Melkertrags einer Melkanlage vor. Das Prinzip der Einstellung der Einrichtung in der vorläufigen Arbeitsstufe besteht in der gemäss vorhandenen Algorithmen erfolgenden Bestimmung der Koeffizienten der Vorkorrektur der einzelnen Milchdosenkomponenten während des simulierenden Melkens unter Realisierung von Arbeits weisen der Melkanlage und der diskreten Schwimmergeber für die einzelnen Milchdosenkomponenten gemäss der Erfindung unter Beachtung der Besonderheiten der konkreten Betriebsbedingungen, der Milcheigenschaften und der konkreten Konstruktion des diskreten Gebers für die einzelnen Milchdosenkomponenten, auch unter Anwendung eines Eichmasses für die Bestimmung der frisch gemolkenen Milchmenge.

Hierzu wird in der vorläufigen Arbeitsstufe der Einrichtung zur Bestimmung des Melkertrags einer Melkanlage die Betriebsvakuumhöhe im Milchsammelbehälter 16 (Fig. 1) der Melkanlage nahe einem Wert von 0,53 kg f/cm$^2$ für den betreffenden Melkanlagentyp eingestellt, die Stromversorgung der Impulszähler $39_1$, $39_2$, $39_3$, $39_4$, $39_5$ eingeschaltet und der Melkapparat in einen Behälter mit dem Eichmass der gemolkenen Milchmenge abgesenkt, das zuvor mit einer Genauigkeit von 1/6 der vorgeschriebenen Genauigkeit der Bestimmung der gemolkenen Milchmenge in der Melkanlage gewogen war. Dabei findet die Simulation des Melkvorgangs bei funktionierendem Melkapparatpulsator statt.

Dank dem Eintauchen des Melkapparates in das Eichmass der kuhwarmen Milchmenge gelangt die letztere in die Vakuumsystemleitung 21 für den Milchtransport in der Melkanlage und danach in den Eintrittsstutzen 6 der Aufnahmekammer 5 des diskreten Gebers 1 für die einzelnen Dosen der Milch 2.

Dabei fliesst die Milch 2 über die Aufnahmekammer 5 und die Öffnung 4 in der Trennwand 3 in die Messkammer 8 ab, während die Luft über die Aufnahmekammer 5 und den Austrittsstutzen 7 mittels der Rohrleitung 20 in den Milchsammelbehälter 16 und danach über den Austrittsstutzen 22 des Milchsammelbehälters 16 und die Vakuumsystemleitung 23 der Melkanlage abgeleitet wird.

Hierbei liegt die Öffnung 12 in der Wand des hohlen Stocks 11 innerhalb des Gehäuses der Aufnahmekammer 5 und steht mit der Vakuumsystemleitung 23 der Melkanlage sowie mit dem Milchsammelbehälter 16 in Verbindung. Indem sie in die Messkammer 8 abfliesst, sammelt sich die Milch 2 in derselben an, und die Milchhöhe in der Messkammer 8 steigt an. Durch die Öffnung 4 in der Trennwand 3 tritt die Milch 2 während der weiteren Melksimulation in die Aufnahmekammer 5 durch und erreicht die Standhöhe des Schwimmerelementes 10.

Das weitere Steigen der Milch 2 im Geber 1 bewirkt eine Aufwärtsbewegung des Schwimmerelementes 10 in der vertikalen Richtung, wodurch eine vertikale Verschiebung des am Schwimmerelement 10 angebrachten hohlen Stocks 11 mit der Öffnung 12 sowie des Ventils 15 eingeleitet wird. Das Ventil 15 nähert sich dabei an die Öffnung 4 in der Trennwand 3 an und strebt, die Öffnung 4 mit seiner elastischen Oberfläche zu überdecken.

Auf das Schwimmerelement 10 wirkt in diesem Augenblick ein Unterdruck ein, der dem Druck im Milchsammelbehälter 16 gleich ist und den Nennwert des Betriebsvakuums beim Melken darstellt, was gemäss den physiologischen Melkanforderungen einen Wert von 0,53 kg f/cm$^2$ ausmacht. Gemäss der tatsächlichen Vakuumhöhe im Milchsammelbehälter 16 wird der Augenblick der Überdeckung der Öffnung 4 in der Trennwand 3 durch das Ventil 15 bestimmt. Dabei spricht das Ventil 15 im Augenblick der Absperrung der Öffnung 4 mit einer umso höheren Verzögerung, grösseren Trägheit und geringerer Geschwindigkeit an, je grösser die Vakuumhöhe im Milchsammelbehälter 16 ist. Wenn die Vakuumhöhe im Milchsammelbehälter 16 stabil und beispielsweise dem empfohlenen Wert von 0,53 kg f/cm$^2$ für den jeweiligen Melkanlagentyp gleich ist, so verläuft das Abtrennen der einzelnen Dosen der Milch 2 durch den diskreten Schwimmergeber 1 ebenfalls verhältnismässig stabil. Dabei ist die Grösse dieser Dose gewöhnlich so gut wie unbekannt, weil die einzelnen Dosen der Milch 2 durch die üblichen (bekannten) Vorrichtungen nicht überwacht werden. Zugleich üben auf die Grösse einer einzelnen Dosis der Milch 2 nicht nur die Eigenschaften und Parameter der frisch gemolkenen Rohmilch 2, sondern auch die konstruktiven, technologischen bzw. betriebsmässigen Einflussgrössen bzw. die Vakuumhöhe im Milchsammelbehälter 16 einen wesentlichen Einfluss aus, wobei die Vakuumhöhe zusätzliche unkontrollierte Milchportionen 2 im Augenblick der Überdeckung der Öffnung 4 in der Trennwand 3 durch das Ventil 15 reguliert. Der Betrag der zusätzlich nachgefüllten Milch 2 bzw. der fehlende Einfüllbetrag der Milch 2 in die Messkammer 8 des diskreten Gebers 1 kann infolge der Unkontrolliertheit dieses Betrags wesentliche Fehler bei der Bestimmung der auf den Melkanlagen gemolkenen Mengen der Milch 2 verursachen. Daher wird in der vorläufigen Arbeitsstufe gemäss der Erfindung der systematische Messfehler bei der Bestimmung der einzelnen Milchdosen 2 beseitigt, in welchem sowohl die Eigenschaften der Milch 2 als auch die Fehler vereinigt sind, die durch die ständig wirkenden Faktoren der konstruktiven, technologischen bzw. betriebsmässigen Art hineingebracht werden, welche für den jeweiligen Typ der diskreten Geber 1 und die jeweilige Melkanlage unter konkreten Anwendungsbedingungen derselben auf der Farm charakteristisch sind.

Dadurch, dass im Augenblick der Bewegung des Ventils 15 an die Öffnung 4 in der Trennwand 3 die Öffnung 12 des hohlen Stocks 11 ausserhalb des Gehäuses der Aufnahmekammer 5 zu liegen kommt, stellt sich in der Messkammer 8 über den hohlen Stock 11 atmosphärischer Druck ein.

Der atmosphärische Druck wirkt auf das Ventil 15 von unten ein, und das Ventil 15 spricht dabei dank der entstehenden Differenz des Unterdruckes in der Aufnahmekammer 5 und des atmosphärischen Druckes in der Messkammer 8 augenblicklich an, wobei es mit seiner elastischen Oberfläche die Öffnung 4 in der Trennwand 3 des Gebers 1 dicht überdeckt.

Gleichzeitig wirkt der atmosphärische Druck auf die Portion der Milch 2 in der Messkammer 8 ein, und diese Milchportion 2 wird dank der Druckdifferenz im Milchsammelbehälter 16 und in der Messkammer 8 aus der Messkammer 8 über den Austrittsstutzen 9 und die Rohrleitung 18 in den Milchsammelbehälter 16 automatisch transportiert.

Dabei findet neben dem Ansprechen des Ventils 15 die automatische Registrierung einer einzelnen, vom diskreten Schwimmergeber 1 gelieferten Dosis der Milch 2 erfindungsgemäss mit Hilfe eines Impulszählers, beispielsweise einem Impulszähler $39_1$, mittels des im oberen Teil des hohlen Stocks 11 befindlichen Dauermagneten 13 und des Summiergebers 32 für die einzelnen Milchdosen statt.

Da der Schutzgaskontakt, beispielsweise der Schutzgaskontakt $37_1$ zur Auswahl des Korrekturkoeffizienten auf die Vakuumhöhe im Milchsammelbehälter 16 abgestimmt und an der Skala des Vakuummeters 34 angebracht ist, die bei der Simulation der im Milchsammelbehälter 16 konkret vorhandenen Vakuumhöhe von 0,53 kg f/cm² entspricht, befindet sich der Vakuumhöhenanzeiger 35 mit dem daran angebrachten zweiten Dauermagneten 36 in unmittelbarer Nähe vom Schutzgaskontakt $37_1$, auf den das magnetische Feld des zweiten Dauermagneten 36 einwirkt.

Dadurch wird der elektrische Stromkreis der Wicklung 47' (Fig. 2) des Gleichstromrelais des Impulszählers $39_1$ geschlossen, der der Vakuumhöhe im Milchsammelbehälter 16, gleich dem vorgegebenen Wert von 0,53 kg f/cm², entspricht. Im Augenblick des Heranbewegens des Magneten 13 (Fig. 1) am Stock 11 an den Schutzgaskontakt des Summiergebers 32 für die einzelnen Milchdosen schliesst daher das magnetische Feld des Magneten 13 den entsprechenden elektrischen Stromkreis des Schutzgaskontaktes des Gebers 32 und den elektrischen Stromkreis der Relaiswicklung, beispielsweise des Impulszählers

$39_1$ wodurch die elektromechanische summierende Zähleinheit 46 ausgelöst wird, die die vom diskreten Schwimmergeber 1 gemäss der Erfindung kommenden Impulse fixiert.

Nachdem eine einzelne Portion der Milch 2 aus dem Geber 1 vom Impulszähler $39_1$ automatisch registriert und unter der Wirkung des atmosphärischen Druckes in den Milchsammelbehälter 16 automatisch transportiert worden ist, steht die Messkammer 8 erneut unter atmosphärischem Druck, der über den Eintrittsstutzen des Milchsammelbehälters 16 den Innenraum der Aufnahmekammer 5 augenblicklich füllt, so dass sich die Druckgrössen in den Kammern 5 und 8 ausgleichen. Durch die Einwirkung ihrer Eigenmasse sinken das Schwimmerelement 10, der Stock 11, das Ventil 15 und der Dauermagnet 13 herab, so dass die Öffnung 4 in der Trennwand 3 erneut freigelegt wird. Es kommen neue Portionen der Milch 2 bei weiterer Simulation des Melkvorganges in der Aufnahmekammer 5 und der Messkammer 8 an, und der Prozess der Formierung der einzelnen Dosen der Milch 2 aus dem kontinuierlichen Strom der genau dosierten Milcheichmenge wird in dieser Weise bis zum vollständigen Verbrauch dieser Milcheichmenge während der Simulation wiederholt.

Nach den Anzeigen des Impulszählers $39_1$ für die einzelnen Milchdosen und die Eichmenge der frisch gemolkenen Milch wird gemäss vorhandenen Algorithmen der der Vakuumgrösse von 0,53 kg f/cm² entsprechende Vorkorrekturkoeffizient ermittelt, der bei der Bestimmung der auf der Melkanlage gemolkenen Milchmenge berücksichtigt wird.

Ähnlich geht die Funktion der Einrichtung in der vorläufigen Stufe der Simulation des Melkvorganges sowie der Einstellung auch in bezug auf weitere vorgegebene Vakuumbeträge im Melksystem vor sich, die vom Nennbetrag 0,53 kg f/cm² verschieden sind.

Da unter realen Betriebsbedingungen der Melkanlagen die Vakuumhöhe im Milchsammelbehälter 16 in einem weiteren Bereich (von 0,45 bis 0,55 kg f/cm²) infolge einer Änderung der Zahl der gleichzeitig funktionierenden Melkapparate und der Zahl der gleichzeitig gemolkenen Kühe wegen Luftansaugung in das Melkanlagenelement im Augenblick des Anschliessens der Melkapparate an das Euter variieren kann, so werden vorteilhafterweise die im vorstehenden beschriebenen Operationen in Anwendung auf die reale Melkanlage (an deren Einsatzort in einer Farm) bei beliebigen diskreten Vakuumhöhen durchgeführt, die innerhalb des erwähnten möglichen Bereiches der realen Vakuumänderungen während des Melkens bei der Bestimmung der auf der Melkanlage erhaltenen Milchmenge liegen. Beispielsweise stellt man mit Hilfe eines Vakuumreglers (bzw. dank künstlicher Luftansaugung in die Vakuumsystemleitung der Melkanlage) einen neu vorgegebenen Vakuumbetrag von 0,50 kg f/cm² im Milchsammelbehälter 16 nach den Anzeigen des Anzeigers 35 des Vakuummeters 34 ein und wiederholt dann die vorbeschriebenen Operationen. Danach stellt man beispielsweise einen Vakuumbetrag von 0,48 kg f/cm² ein und wiederholt dieselben Operationen. Die Schutzgaskontakte $37_1$-$37_5$ auf der Skala des Vakuummeters 34 sind in den Skalenpunkten radial angeordnet, in denen Vorversuche zur Bestimmung von den Vakuumbeträgen im Milchsammelbehälter 16 entsprechenden Korrekturkoeffizienten vorgenommen wurden. Dabei ist jeder Schutzgaskontakt $37_1$, $37_2$, $37_3$, $37_4$ bzw. $37_5$ des Vakuummeters 34 mit einem einzelnen Impulszähler $39_1$, $39_2$, $39_3$, $39_4$ bzw. $39_5$ elektrisch verbunden, wobei jeder Schutzgaskontakt $37_1$, $37_2$, $37_3$, $37_4$, $37_5$ bei Änderung des Vakuums bis zu einem vorgegebenen Wert mit dem Magneten 36 zusammenwirkt.

Nach den Anzeigen der Impulszähler $39_1$, $39_2$, $39_3$, $39_4$ bzw. $39_5$ für die einzelnen Dosen der Milch 2 und für die Eichmenge der frisch gemolkenen Milch wird gemäss den gewählten Algorithmen der dem jeweiligen Vakuumbetrag im Milchsammelbehälter 16 entsprechende Koeffizient der endgültigen Korrektur der einzelnen Milchdosen ermittelt.

Die Gesamtmenge der gemolkenen Milch wird nach der Erfindung gemäss folgender Beziehung bestimmt: $AK_1 + BK_2 + CK_3 + DK_4 + EK_5 + ...MK_n$, worin A, B, C, D, E, M die Anzeigen der Impulszähler für die einzelnen Milchdosen bedeuten, die den M-Vakuumhöhen im Milchsammelbehälter entsprechen.

Die Realisierung des kontinuierlichen Prozesses der endgültigen Korrektur von Fehlern, die bei Änderung der Vakuumhöhe im Milchsammelbehälter der Melkanlage beim Bestimmen der auf der Melkanlage gemolkenen Milchmenge eintreten, erhöht die Messgenauigkeit des Milchertrags und trägt zur Erhöhung der Melkeffektivität dank der Verbesserung der zootechnischen, Veterinär- und Zuchtarbeit mit der Herde bei.

So gestattet es die Durchführung der endgültigen Korrektur der einzelnen vorkorrigierten Milchdosen während deren Formierung im diskreten Geber 1, unkontrollierte Portionen der Milch 2 in der Messkammer 8 bei Änderungen des Unterdruckes in der Melkanlage zu erfassen, was die Genauigkeit der Bestimmung des Melkertrags auf Melkanlagen insgesamt zu erhöhen erlaubt.

Die Erfindung kann in Vakuumsystemen zum Melken von Tieren und zum genauen Bestimmen der von ihnen ermolkenen Milchmenge zur effektiven zootechnischen, Veterinär- und Zuchtarbeit mit der Tierherde angewendet werden.

**Patentansprüche**

1. Einrichtung zur Bestimmung des Melkertrags einer Melkanlage, enthaltend einen diskreten Geber (1) vom Schwimmer-Typ zum Messen einzelner Dosen von Milch (2), der eine Aufnahmekammer (5) mit einem Eintrittsstutzen (6) und einem Austrittsstutzen (7) sowie eine Messkammer (8) mit einem Austrittsstutzen (9) einschliesst, die durch eine Trennwand voneinander getrennt sind, wobei in der Messkammer (8) ein Schwimmerelement (10) angeordnet ist, das an einem hohlen Stock (11) befestigt ist, der mit einer Öffnung (12) in der Seitenwand ausgestattet ist, die ausserhalb der Aufnahmekammer (5) liegt und bei der Bewegung des hohlen Stocks (11) bis zur vorgegebenen Stelle in der mit der Richtung des Anstiegs der Milch (2) im diskreten Geber (1) übereinstimmenden Richtung mit der Atmosphäre in Verbindung steht, wobei in der Zone des geschlossenen Endes des hohlen Stocks (11) ein Dauermagnet (13) befestigt ist, während in der Zone des offenen Endes des hohlen Stocks (11) ein Ventil (15) befestigt ist, das sich in der Messkammer (8) unter der Trennwand (3) mit der Öffnung (4) befindet, einen Milchsammelbehälter (16), dessen Eintrittsstutzen (17) mit dem Austrittsstutzen (9) der Messkammer (8) des diskreten Gebers (1) und dessen Stutzen (19) mit dem Austrittsstutzen (7) der Aufnahmekammer (5) des diskreten Gebers (1) verbunden ist, deren Eintrittsstutzen (6) mit der Vakuumsystemleitung (21) für den Milchtransport in der Melkanlage verbunden ist, während der Austrittsstutzen (22) des Milchsammelbehälters (16) mit der Vakuumsystemleitung (23) der Melkanlage verbunden ist, eine Recheneinheit (31) und einen Summiergeber (32) für die einzelnen Milchdosen, dessen Anschlüsse an den ersten Eingang und den ersten Ausgang der Recheneinheit (31) angeschlossen sind und der in der Anordnungszone des am hohlen Stock (11) befestigten Dauermagneten (13) im Augenblick der Erreichung der vorgegebenen Standhöhe der Milch (2) im diskreten Geber (1) liegt, dadurch **gekennzeichnet,** dass sie ein Vakuummeter (34) enthält, das mit dem Milchsammelbehälter (16) verbunden und zum Messen der Vakuumhöhe im Milchsammelbehälter (16) der Melkanlage und Erzeugen von Steuersignalen bestimmt ist, die beim Formieren der endgültigen Korrektur der vorkorrigierten einzelnen Milchdosen wirksam werden, welche von der Änderung der Vakuumhöhe im Milchsammelbehälter (16) abhängen, während die Recheneinheit (31) in Form einer Gruppe von Impulszählern ($39_1$, $39_2$, $39_3$, $39_4$, $39_5$) ausgeführt ist, die den Koeffizienten der endgültigen Korrektur der vorkorrigierten einzelnen Milchdosen entsprechen, wobei das Vakuummeter (34) einen beweglichen Anzeiger (35) der Vakuumhöhe im Milchsammelbehälter (16) mit einem daran angebrachten zweiten Dauermagneten (36) sowie eine mit dem zweiten Dauermagneten (36) zusammenwirkende Gruppe von Schutzgaskon-

takten ($37_1$, $37_2$, $37_3$, $37_4$, $37_5$) enthält, von denen jeder zur Erzeugung des Steuersignals durch Ein- bzw. Ausschalten eines entsprechenden Impulszählers ($39_1$, $39_2$, $39_3$, $39_4$, $39_5$) bestimmt und über seinen ersten Anschluss an den ersten Eingang des jeweiligen Impulszählers ($39_1$, $39_2$, $39_3$, $39_4$, $39_5$) angeschlossen ist, während die zweiten Eingänge sämtlicher Impulszähler ($39_1$, $39_2$, $39_3$, $39_4$, $39_5$) vereinigt und an den ersten Anschluss eines Schutzgaskontaktes des Summiergebers (32) für die einzelnen Milchdosen angeschlossen sind, dessen zweiter Anschluss mit den zweiten Anschlüssen der Schutzgaskontakte ($37_1$, $37_2$, $37_3$, $37_4$, $37_5$) des Vakuummeters (34) verbunden ist.

## Claims

1. An apparatus for determining the yield of milk by a milking machine, comprising a discrete sensor (1) of the float type for metering out the successive doses of milk (2), including a reception chamber (5) with an inlet pipe (6) and an outlet pipe (7) and a measurement chamber (8), with an outlet pipe (9), separated by a partition (3) with a window (4), the measurement chamber (8) accomodating a float element (10) mounted on a hollow rod (11) having an opening (12) through ist side wall situated outside the reception chamber (5) to communicate with the ambient atmosphere as the hollow rod (11) moves into a predetermined position in the direction of the rising level of milk (2) in the discrete sensor (1), with a permanent magnet (13) mounted adjacent to the closed end of the hollow rod (11) and a valve member (15) mounted adjacent to the open end of the hollow rod (11), received in the measurement chamber (8) under the partition (3) with the window (4); a milk receptacle (16) having its first inlet pipe (17) connected to the outlet pipe (9) of the measurement chamber (8) of the discrete sensor (1) and its inlet pipe (19) connected with the outlet pipe (7) of the reception chamber (5) of the discrete sensor (1), the inlet pipe (6) of the reception chamber (5) being connected with the vacuum milk-conveying line (21) of the milking machine, an outlet pipe (22) of the milk receptacle (16) being connected to a vacuum line (23) of the milking machine, a computting unit (31), a pickup (32) for summing up the successive milk doses having its leads connected to the first input and first output of the computing unit (31), arranged in the area occupied by the permanent magnet (13) mounted on the hollow rod (11) when milk (2) in the discrete sensor (1) rises to a predetermined level, **characterized** in that it comprises a vacuum gauge (34) communicating with the milk receptacle (16), intended for measuring the level of vacuum in the milk receptacle of the milking machine and feeding out control signals for defining final correction of precorrected successive doses of milk dependent on the variation of the vacuum value in the milk receptacle (16), the computing unit (31) including an array of pulse counters ($39_1$, $39_2$, $39_3$, $39_4$, $39_5$) corresponding to the coefficients of final correction of precorrected successive doses of milk, the vacuum gauge (34) including a movable indicator (35) of the level of vacuum in the milk receptacle (16), carrying a permanent magnet (36) cooperating with an array of reed relays ($37_1$, $37_2$, $37_3$, $37_4$, $37_5$) intended each for sending out a control signal for activation/deactivation of the respective pulse counter ($39_1$, $39_2$, $39_3$, $39_4$, $39_5$), having their respective first leads connected to the first inputs of the respective pulse counters ($39_1$, $39_2$, $39_3$, $39_4$, $39_5$), the respective second inputs of all pulse counters ($39_1$, $39_2$, $39_3$, $39_4$, $39_5$) being joined and connected to the first lead of the reed relay of the pickup (32) for summing up the successive doses of milk, its other lead being connected to the second leads of the reed relays ($37_1$, $37_2$, $37_3$, $37_4$, $37_5$) of the vacuum gauge (34).

## Revendications

1. Dispositif pour la détermination du débit du lait pour machine à traire comprenant un détecteur discret (1) à flotteur de mesure des portions séparées de lait (2) contenant, separés par une cloison (3) munie d'un orifice (4), un réceptacle (5) avec des tubulures d'entrée (6) et de sortie (7) et une chambre de mesure (8) avee une tubulure de sortie (9), tandis que la chambre de mesure (8) abrite un flotteur (10) fixé sur une tige creuse (11) ayant dans sa paroi latérale un orifice (12) situé en dehors du réceptacle (5) et relié à l'atmosphère lors du déplacement de la tige creuse (11) jusqu' à la position définie dans le sens coïncidant avec celui de l'élévation du niveau du lait (2) dans le détecteur discret (1), ladite tige creuse (11) possédant un aimant (13) fixé dans la zone de son bout fermé et une soupape (15) fixée dans la zone de son bout ouvert dans la chambre de mesure (8) sous la cloison (3) munie de l'orifice (4), un récipient (16) collecteur de lait dont une tubulure d'entrée (17) est reliée à la tubulure de sortie (9) de la chambre de mesure (8) du détecteur discret (1) et une tubulure (19) est reliée à la tubulure de sortie (7) du réceptacle (5) du détecteur discret (1), tandis que la tubulure d'entrée (6) dudit réceptacle est reliée à une canalisation (21) du système à vide pour le transport du lait de la machine à traire et une tubulure de sortie (22) du récipient (16) collecteur de lait est reliée à une canalisation (23) du système à vide de la machine à traire, un organe de calcul (31), un capteur (32) d'addition des portions séparées de lait dont les sorties sont reliées à la première entrée et à la première sortie de l'organe de calcul (31) et qui est disposé dans la zone d'emplacement de l'aimant (13) permanent fixé sur la tige creuse (11) au moment où le lait (2) dans le détecteur discret (1) atteint le niveau défini, **caractérisé** en ce qu'il comprend un vacuomètre (34) communiquant avec le récipient (16) collecteur de lait destiné à mesurer le degré de vide dans le récipient (16) collecteur de lait et à élaborer des signaux de commande utilisés pour la correction définitive des portions séparées de lait ayant subi la correction préalable et dépendant de la variation du degrès de vide dans le récipient (16) collecteur de lait, tandis que l'organe de calcul (31) représente un groupe de compteurs ($39_1$, $39_2$, $39_3$, $39_4$, $39_5$) d'imulsions correspondant aux coefficients de la correction définitive des portions séparées de lait ayant subi la correction préalable, le vacuomètre (34) comprend un index mobile (35) de degrès de vide dans le récipient (16) collecteur de lait pourvu d'un aimant permanent (36) et un groupe de contacts à enveloppe scellée ($37_1$, $37_2$, $37_3$, $37_4$, $37_5$) chacun desquels est destiné à former un signal de commande pour branchement/débranchement du compteur ($39_1$, $39_2$, $39_3$, $39_4$ ou $39_5$) d'impulsions respectif et branché par sa première borne de sortie sur la première entrée du compteur ($39_1$, $39_2$, $39_3$, $39_4$ ou $39_5$) d'impulsions respectif, tandis que les deuxièmes entrées de tous les compteurs ($39_1$, $39_2$, $39_3$, $39_4$, $39_5$) d'impulsions sont réunies et reliées à la première borne de sortie d'un contact à enveloppe scellée du capteur (32) d'addition des portions séparées de lait, la deuxième borne de sortie duquel est reliée aux deuxièmes bornes de sortie des contacts à enveloppe scellée ($37_1$, $37_2$, $37_3$, $37_4$, $37_5$) du vacuomètre (34).

FIG.1

FIG.2

FIG.3